# EUROPEAN PATENT APPLICATION

(11) **EP 1 947 596 A1**
(43) Date of publication of application: **23.07.2008**
(21) Application number: 07001008.7
(22) Date of filing: 18.01.2007
(51) Int. Cl.: G06Q 10/00

(54) **A method for automatically displaying electronic information received by a recipient in a sorted order and a communication system and/or system for exchanging information**

(71) Applicant: Jubii IP Limited, 35 Vine Street London EC3N 2AA (GB)
(72) Inventor: Rudat, Robin, 33790 Halle (DE)
(74) Representative: Von Renesse, Dorothea

(57) **Abstract**

Trustability and importance of incoming electronic information such as electronic messages and electronic data files are automatically calculated on the basis of the relationship between recipient and sender. The relationship comprises the communication behavior and the social connection between recipient and sender. For each incoming message it is checked whether predefined relationship items are fulfilled. Concrete relationship values are assigned to each fulfilled relationship item, enabling the calculation. The information about the behaviour and the social connections are predominantly stored in a contact list not visible by the recipient and containing information of all contacts the recipient has communicated with during a predefined period of time. The electronic messages can be categorized into trusted and distrusted messages and in a trusted view they can be listed in rank order or marked-up with respect to importance.

## Description

The present invention relates to a method for displaying electronic information (e.g. electronic messages, electronic data files) received by a recipient in a sorted order. Furthermore, the invention relates to a communication system and/or system for exchanging information.

Communication by electronic messages, in particular emails, across local area networks or worldwide networks, e.g. the internet, has significantly increased during the recent decade. Nowadays users of electronic message systems often have to face huge amounts of electronic messages, the administration of which is often time consuming and hardly acceptable. Moreover, important messages risk to be overseen in the bulk of spam, newsletters or other messages of minor importance.

Commonly known inboxes for electronic messages conventionally display incoming messages in accordance to the time of receipt. Alternatively, the messages can be listed (sorted) according to the sender or the size of the data transferred. However, these alternatives do not remedy the problem of lack of distinction between important and minor important messages. Approaches to sort the messages according to the given name of the subject are not reliable, since many users do not systemize the assignment of subjects or do not stick to the subject name once given.

It is thus the object of the present invention to provide a method and a communication system, wherein the messages are displayed in order to allow the recipient of the messages to more easily identify important messages and distinguish them from messages of minor importance.

According to the present invention a method is provided for displaying electronic information such as electronic messages, comprising the following steps:
a) defining at least one relationship item for the assessment of the relationship between a recipient and a sender of an electronic message,
b) assigning a relationship value to said defined relationship item,
c) assessing for each incoming message the relationship between the sender and the recipient of said message and
d) displaying the incoming message and/or at least part of the past messages from the sender in a sorted order according to the relationship between the sender and recipient.

The method according to the invention allows to automatically display the incoming electronic messages according to the recipient's relationship to the sender. The selection of one or more relationship items out of a list of relationship items calculated by the communication system and possibly their respective significance is favorably under the discretion of the receiver (user of the system). After having selected the relationship item(s) and/or their significance there is no need for further activities of the receiver. Accordingly, the method and system of the invention allow a sorting of messages customized to the receiver's preferences and needs. Therewith it eases the administration of emails and reduces the risk of overseeing important messages.

Basis for the calculation of the sorted order is a comparison of the relationship between the recipient and sender of the message with predefined relationship items. Said relationship items are preferably stored in the definition-memory module. The relationship items are suitable for assessing the relationship between the users of the system, e.g. behavior patterns (behavioral items) or social connection between sender and recipient. The behavioral pattern can be assessed e.g. by determining the length of time, which usually has lapsed before the recipient replies to the sender, or the frequency of communication between the sender and the recipient. Hence, the behavioral items are defined as parameters reflecting the actual activity in communication of the recipient with respect to the sender.

The information about the behavioral pattern - e.g. the frequency of contacts - between the recipient and a sender of a message is preferably available from the memory of a contact-memory module, e.g. of a server unit. The contact-memory module can be a special contact list.

In one embodiment of the invention the behavioral items can be supplemented by relationship items, which are manually pre-determined by the recipient. For instance, the system can provide the option to classify the sender of a message as "trustable" or "important" or not. Other items, such as the listing of the sender's contact information in the recipient's address book can also be included in the assessment of the relationship and are encompassed by the term "relationship item".

To each relationship item a certain relationship value, e.g. a numerical value, is assigned and stored as well.

Since the assessment of the relationship favorably depends *inter alia* on the recipient's behavior (see above), the relationship can change dynamically and therewith is in line with the current relationship between the recipient and the sender. Due to this flexibility and adjustability the inbox according to the present invention can be called "intelligent inbox".

Each time an electronic message arrives, available information about the sender and about the communication behavior between recipient and said sender is identified and the respective relationship items are determined. For each relationship item the assigned relationship value is used for determining the category (sorted order) of the message and/or the rank order of the message within the sorted order. Hence, with each incoming message the sorted order and rank order is newly calculated and - if the case arises - adjusted.

In the following definitions are given to ease the understanding of the invention.

Sorted order: any order, classification or category resulting from predefined rules. For instance, messages categorized on the bases of relationship items can be displayed in different fields or different inboxes.

Rank order: Order within a category (sorted order), whereas the position or the mark-up of a message within the sorted order depends on its priority, precedence or its relationship value(s).

Relationship item: Any parameter, which reflects the relationship between two users of a communication system. "Fulfilling a relationship item" means matching the relationship item with a certain communication behavior or a certain social connection.

Relationship value: Numerical quantity or unique expression, assigned to a certain relationship item and allowing computer calculations.

Behavior item: Relationship item with respect to communication behavior of an individual user of the system.

Definition-memory-module: Computer module comprising a memory to store definitions for relationship items and/or relationship values assigned to said relationship items.

Contact-memory module: Computer module comprising a memory to store information about the recipient's communication, e.g. addresses of contacts or time of communication.

Subsequently, one preferred embodiment of the invention is described in more detail:

In a communication system a server unit and a plurality of user interface devices, e.g. personal computers, are configured to be connected to a common network, e.g. the internet or a local area network (LAN). The server unit comprises a database of registered users, also called "members", whereby the server unit and the user interfaces are programmed in order to enable the exchange of electronic messages, e.g. emails, between the registered users among themselves or between registered users and non-registered users of the network. The server unit is programmed to provide a network portal, whereby for each registered user an inbox for incoming messages is supplied.

This embodiment of the invention is described in the view of the recipient of messages. Said recipient is one of the registered users.

The intelligent inbox displays incoming messages such that the recipient is able to access messages quickly which are most likely the most important and trusted ones for him. Therefore, all incoming messages are rated towards trustability and importance. A basis for said rating is an individual contact list for each registered user of the communication system. This contact list is established on the server unit and contains information about every contact the recipient has communicated with during a predefined period of time. "Contacts" are individuals which may be members but need not to be members of the communication system.

The information available from said contact list comprises at least address, e.g. email address, number and time of communication items related to a certain contact. Additionally, the contact list can comprise information about markings of contacts or single messages with respect to trustability or importance. The contact list is automatically filled with said information and not visible to the recipient. Therewith the contact list differs from common known address books or buddy lists.

Hence, the recipient does not manually fill his contact list with selected entries and does not manipulate single information items contained therein. By default, entries in the list are deleted after a pre-selected period of time, e.g. 180 days. The recipient has the possibility to change the expiry time to another value, e.g. down to 30 days. Moreover, the contact list can be set up to allow a manual one time clean up by the recipient.

In the following, an example for managing and displaying incoming electronic information, here electronic messages, is given:

When a message arrives on the server unit it is first filtered by common spam filters. If a message is recognized as a spam, e.g. by the domain key, the message could be rejected for example. If the message is not spam, it is delivered to the recipient's inbox. It is possible to furthermore apply a content filter, to further check whether the message is suspicious. If the message is rated as suspicious, it is marked but delivered to the inbox.

For all messages arriving in the inbox the sorted or rank order is automatically calculated. The inbox is divided into separate views of different message categories. Only messages being rated as trusted are shown in a view for trusted messages (1^{st} category) whereas distrusted messages are shown in a view for distrusted messages (2^{nd} category). Within the trusted category the messages are displayed in a rank order with respect to importance. Rank order can mean that the most important message is on top of the list. Alternatively, the rank of the messages can be marked, e.g. with integers or color.

For calculation of the sorted or rank order of an incoming message it is checked against a set of pre-defined relationship items. These relationship items are based on the recipient's relationship to the contact. Said relationship between recipient and contact comprises their communication behavior and social connections among themselves. A social connection is given e.g. by following cases:
a) The contact's address is part of the recipient's address book,
b) The contact's address is part of the recipient's contact list,
c) The contact's address is part of the address book or contact list of a third registered user which in turn is part of the recipient's address book or contact list.

In the following an example for trustability rating is given. Table 1 lists a set of relationship items in the left column and relationship values related thereto in the right column. With respect to trustability rating the relationship values are in the following named "trustability impact values". Therewith, Table 1 gives an assigning-rule between relationship items and trustability impact values. Three different trustability impact values are given, namely "weak", "normal" and "strong".

**Table 1**

| **Possible Relationship Item for Trustability Rating** | **Value** |
|---|---|
| Recipient received messages from contact before. | Normal |
| More than a defined percentage of the messages which the recipient received from that contact are read. | Normal |
| Recipient sent message to contact within a defined period. | Strong |
| Recipient sent message to contact more than a defined period ago. | Normal |
| Contact is part of level 1 member's¹ contact list | Weak |
| Contact is part of level 2 member's² address book | Normal |

| | |
|---|---|
| ¹Level 1 member: A registered user who is part of the recipient's address book; ²Level 2 member: A registered user who is part of the recipient's contact list but not of his address book. | |

An example for calculation-rules which need to be fulfilled to reach the status "trusted" is that at least one relationship item with the trustability impact value "strong" is fulfilled or if at least three relationship items with trustability impact value "normal" are fulfilled. Moreover, two trustability impact values "weak" can substitute one trustability impact value "normal".

The recipient cannot define or change the relationship items or the trustability impact values, respectively. However, it is foreseen that the recipient is able to influence the assigning-rule or the calculation-rules indirectly, e.g. by answering abstract questions, as for instance "How should your reading-behavior influence the rating, "strong", "medium" or "weak"?". These questions are internally related to the assigning-rule and calculation-rules. Therewith the answers lead to a change of the assigning-rules and/or the calculation-rule and, hence, possibly to a change of the electronic messages rated as "trusted".

Furthermore, the recipient has the possibility to define rules, which lead to a higher trustability, if a message follows such rules.

Additionally, the recipient has the ability to rate a contact manually as "trusted" or "distrusted", for example after having opened a message of said contact. This manual rating overwrites all applied calculations with respect to trustability to future messages of said sender.

To avoid cheating the recipient should not be able to see exact relationship items, trustability impact values, assigning-rules or calculation rules.

The relationship items defined in Table 1 consider the recipient's behavior as well as the behavior of other users or the content of their address books or their contact lists. In order to guarantee the privacy of each registered user it can be foreseen that he has the possibility to decide whether his own address book or contact list is used for other users' rating.

With the above method all incoming and not rejected messages are distributed to the trusted or distrusted view. In the trusted view the messages are ordered or marked-up in relation to their importance level. To automatically calculate the importance level all incoming messages are checked against a further predefined set of relationship items with assigned relationship values, whereby for the importance rating the relationship values are integers and in the following named "importance impact values". Trustability and importance are calculated at the same time.

For importance calculation the importance impact values of every relationship item fulfilled by a message are summed up, the sum being decisive for a rank order. The message with the highest sum of importance impact values is most important, and positioned or marked accordingly. Table 2 shows an exemplary list of relationship items.

**Table 2**

| **Relationship Item for Importance Rating** |
|---|
| First time of contact |
| Recipient never sent a message to contact |
| More than 1 week since last communication |
| Recipient received messages from contact but never opened them |
| Recipient initiated communication with contact within last 3 days |
| Contact replied to a message from only the recipient |
| Contact answered on a conversation the recipient received |

In the above example of Table 2 no social connections between recipient and contact are considered for importance rating but solely behavior items, mainly considering the communication behavior between recipient and contact. As a matter of course, social connections can be considered as well.

As for trustability rating the recipient is able to modify the influence of the relationship items to importance rating without knowing the items in detail. Thus, the recipient has the possibility to change the relevancy of certain factors for the calculation of the importance from "weak" to "strong", e.g. by means of a slide bar. For instance the following factors have to be considered:
a) the users' behavior against the sender,
b) the senders' behavior towards the user,
c) interaction between user and sender, and
d) the social connection between user and sender.

While changing the relevancy of the said factors the assigning-rule and/or the calculation rules for importance calculation are changed and the new calculated list of messages is shown to the recipient, enabling him to recognize the most suitable setting.

Trustability and importance of messages are strongly correlated to trustability and importance of the sender of the said message. Therefore, rating the trustability and importance of incoming messages is based on the evaluation of the sender. Hence, according to the evaluation of the sender messages is automatically categorized or rated into "trusted" and "distrusted" in order to display them in different views, e.g. different views of the address book or of a separate sender list. Within the trusted view the senders can be listed in a rank order with respect to importance.

The rank order of a list of messages and the rank order of the list of senders are calculated and therewith changed simultaneously. With each incoming message the lists are newly calculated.

Since for trustability rating as well as for importance ranking a certain amount of communication of the recipient is necessary, it is possible to disable the application of the described importance-rules until a predefined period of time in which the recipient has used the communication system or a certain amount of communication and/or contacts are in the contact list.

## Claims

1. A method for displaying electronic messages received by a recipient in a sorted order, **characterized by**
a. defining at least one relationship item for the assessment of the relationship between a recipient and a sender of an electronic message,
b. assigning a relationship value to said defined relationship item,
c. assessing for each incoming message the relationship between the sender and the recipient of said message and
d. displaying the message and/or at least part of past messages from the sender in a sorted order according to the relationship between the sender and recipient.

2. The method according to claim 1, **characterized in that**
the sorted order of the messages is determined by their importance and/or trustability for the recipient.

3. The method according to claim 1 or 2, **characterized by** establishing a contact list containing contact information of contacts the recipient has communicated with.

4. The method according to claim 3, **characterized in that** said contact list is part of the contact-memory module and that said contact information comprises data suitable to verify the relationship item(s) between recipient and sender.

5. The method according to claim 3 or 4, **characterized in that** entries being stored a predefined period of time in the contact list are deleted from said contact list.

6. The method according to one of the claims 3 to 5, **characterized in that** said contact list is not visible to the recipient.

7. The method according to one of the claims 3 to 6, **characterized in that** the contact information can be deleted all at one time by the recipient.

8. The method according to one of the preceding claims, **characterized by**
a) establishing trustability categories for incoming electronic information (e.g. senders or messages),
b) assigning display attributes to each of the trustability categories,
c) automatically rating the trustability of each electronic information on the basis of said relationship values, and
d) displaying the information according to the display attributes assigned to the trustability category of the information.

9. The method according to claim 8, **characterized by**
a) establishing at least "distrusted" and "trusted" as trustability categories and
b) displaying only trusted messages in a trusted view.

10. One of the preceding claims, **characterized in that**
at least some of the messages are automatically displayed in a rank order.

11. The method according to claim 10, **characterized in that** the rank order of the messages is determined by their importance for the recipient.

12. The method according to one of the preceding claims, **characterized in that**
it is taken as a relationship item whether or not the sender has been entered into an address book of the recipient.

13. The method according to one of the preceding claims, **characterized in that**
it is taken as a relationship item whether or not the sender has been entered into an address book of a third person who has been entered into the recipient's address book.

14. The method according to one of the preceding claims, **characterized in that**
it is taken as a relationship item whether or not the sender has been entered into the recipient's contact list.

15. The method according to one of the preceding claims, **characterized in that**
it is taken as a relationship item if the sender is marked by the recipient with respect to importance and/or trustability.

16. The method according to one of the preceding claims, **characterized in that**
the number of messages, the recipient has sent to the sender within a predefined period of time, is taken as a relationship item.

17. The method according to one of the preceding claims, **characterized in that**
the frequency of mutual communication between the recipient and the sender within a predefined period of time is taken as a relationship item.

18. The method according to one of the preceding claims, **characterized in that**
the number of incoming messages of said sender during a predefined period of time is taken as a relationship item.

19. The method according to one of the preceding claims, **characterized in that**
the ratio of the sender's messages opened by the recipient is taken as a relationship item.

20. The method according to one of the preceding claims, **characterized in that**
it is taken as a relationship item, whether or not at least one of the messages of the sender has been marked by the recipient with respect to importance and/or trustability.

21. The method according to one of the preceding claims, **characterized in that**
the time elapsed between incoming and/or outgoing messages in communication with the sender is taken as a relationship item.

22. The method according to one of the preceding claims, **characterized in that**
the senders of the electronic messages are displayed in a sorted order with respect to trustability and/or importance, whereby the sorted order is automatically calculated on the basis of at least some of said relationship values.

23. The method according to one of the preceding claims, **characterized in that**
assigning-rules for assigning the relationship values to said relationship items are not visible to the recipient.

24. The method according to one of the preceding claims, **characterized in that**
calculation-rules for calculating the sorted order from the relationship values are not visible to the recipient.

25. The method according to one of the preceding claims, **characterized in that**
the recipient is able to influence the assigning-rules and/or the calculation-rules by answering abstract questions.

26. The method according to one of the preceding claims, **characterized in that**
the recipient is able to influence the assigning-rules and/or the calculation-rules by setting levels for certain predefined factors.

27. The method according to claim 25 or 26, **characterized by**
automatically adjusting the display in sorted order at the time the recipient influences the assigning-rules and/or the calculation-rules.

28. A communication system comprising a server unit with a data base of registered users and a plurality of user interface devices, the server unit and the user interface devices being configured to enable the exchange of electronic messages in a network, **characterized in that** the communication system is adapted for operating the method according to claims 1 to 27.
